# FASCICULE DE BREVET EUROPEEN

(11) **EP 3 044 966 B1**
(45) Date de publication et mention de la délivrance du brevet: **25.12.2019**
(21) Numéro de dépôt: 14759176.2
(22) Date de dépôt: 04.09.2014
(51) Int. Cl.: H04N 21/422, H04N 21/4623

(54) **MÉTHODE POUR CONTRÔLER L'ACCÈS À DU CONTENU DIFFUSÉ**
VERFAHREN ZUR STEUERUNG DES ZUGRIFFS AUF RUNDFUNKINHALTE
METHOD FOR CONTROLLING ACCESS TO BROADCAST CONTENT

(30) Priorité: 13.09.2013 US 201361877297 P; 27.09.2013 EP 13186380
(43) Date de publication de la demande: 20.07.2016
(73) Titulaire: Nagravision S.A., 1033 Cheseaux-sur-Lausanne (CH)
(72) Inventeur: SERVIGNAT, David, 13600 Ceyreste (FR); PONT, José-Emmanuel, 1033 Cheseaux sur Lausanne (CH); THOMAS, Frédéric, 1213 Onex (CH); JANTZ, Scott, Gainesville, Florida 32653 (US); LIVAY, Nir, Gainesville, Florida 32653 (US)
(74) Mandataire: Ipside
(86) Numéro de dépôt international: PCT/EP2014/068805
(87) Numéro de publication internationale: WO 2015/036310

(56) Documents cités:
- WO-A1-2011/011854
- WO-A2-2013/061174
- FR-A1- 2 861 237
- US-A1- 2003 058 269
- US-A1- 2003 181 160
- US-A1- 2006 020 960
- US-A1- 2007 016 936
- US-A1- 2013 124 740
- US-A1- 2013 201 905
- US-B1- 8 387 084

## Description

### Introduction

La présente invention concerne le domaine du contrôle de l'accès à du contenu audiovisuel diffusé à un récepteur, en particulier le contrôle portant sur la localisation du récepteur.

### Etat de la technique

Il existe plusieurs applications qui requièrent la géo-localisation d'un récepteur dans le domaine de la diffusion de contenu audiovisuel. Une première raison est la fonction de blackout qui consiste à empêcher les récepteurs dans une certaines régions d'accéder au contenu. Cette fonction a été introduite par les organisateurs d'événements sportifs afin d'interdire l'accès à l'événement aux récepteurs se trouvant dans la même région que l'événement. Ceci pour inciter les personnes intéressées à venir voir l'événement plutôt que de le consommer derrière un écran de télévision.

Une seconde raison est la fonction "account packing" c'est-à-dire la proposition d'un deuxième ou troisième récepteurs de contenu à prix réduit. La condition est que ces récepteurs restent dans le même foyer pour bénéficier de la réduction. Il est tentant de prendre un deuxième récepteur à prix réduit et de l'installer chez une connaissance. La connaissance de la position des récepteurs permet de vérifier si la condition de proximité des récepteurs est respectée.

Une troisième raison qui est proche de la fonction "blackout" est la gestion des droits de diffusion par territoire. Un opérateur acquiert les droits de diffusion pour un territoire donné. Néanmoins, un signal diffusé ne peut suivre des frontières arbitraires et le signal déborde de la zone d'autorisation. L'opérateur est alors invité, pour se conformer à ses obligations légales, de mettre des moyens techniques en place pour éviter que les récepteurs hors de sa zone puissent accéder au contenu. C'est pourquoi il a été proposé selon l'état de la technique (par exemple US 6'317'500), d'intégrer un système de géo-localisation dans les récepteurs afin de contrôler l'accès aux contenus.

Le défaut de ces systèmes est que la réception des satellites de géo-localisation n'est en général pas possible à l'intérieur des maisons ou appartements. Le but de la présente invention est d'apporter une solution à ce problème.

Le document FR2861237A1 décrit un procédé de contrôle d'accès à des données numériques embrouillées distribuées à au moins un équipement utilisateur et auxquelles est associé un message de contrôle d'accès comportant une pluralité de critères d'accès conditionnel. Ce procédé comporte les étapes suivantes: a - définir une pluralité de zones géographiques et identifier chaque zone par une référence géographique, b - associer au message de contrôle d'accès au moins une référence d'une zone géographique définie à l'étape a), c - calculer la position géographique réelle de l'équipement utilisateur au moyen d'un positionneur externe et transmettre cette position audit équipement, d - déterminer la zone ou les zones dans lesquelles se trouve effectivement l'équipement utilisateur à partir de la position réelle calculée à l'étape c), e - gérer l'accès aux données en fonction des conditions d'accès de l'équipement utilisateur dans la zone ou les zones déterminée(s) à l'étape d).

### Brève description de l'invention

Le but de la présente invention est de proposer une méthode de vérification de localisation qui ne puisse pas être contournée par la simple transmission d'une localisation par un dispositif portable situé loin du récepteur, en particulier éviter que lorsque le récepteur est hors de la zone d'autorisation, un dispositif portable situé dans la zone puisse être utilisé pour acquérir la localisation et la transmettre à des moyens de vérifications.

Dans le cadre de la présente invention, il est proposé une méthode de contrôle d'accès à du contenu diffusé à un récepteur, telle que définie en revendication 1, et un système de réception d'un contenu audiovisuel, tel que défini en revendication 8.

### Brève description des figures

La présente demande sera mieux comprise grâce à la description détaillée basée sur les figures :
- figure 1 illustre le système de l'invention,
- figure 2 illustre l'opération de communication entre un accessoire intelligent et un centre de gestion,
- figure 3 illustre l'échange de données utilisant la technique du SMS,
- figure 4 illustre les éléments dans l'échange de données utilisant la technique du SMS,

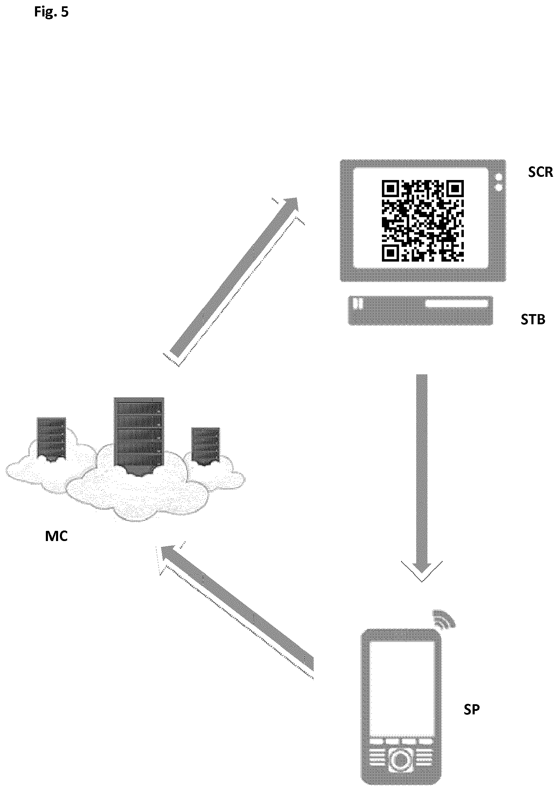

- figure 5 illustre l'affichage d'un code d'identification sur l'écran du récepteur.

### Description détaillée

Plusieurs modes de réalisation sont proposés dans la cadre de la présente demande. Les points communs sont :
- un récepteur STB reçoit des données diffusées pour lesquels l'on souhaite contrôler géographiquement l'accès,
- un écran SCR est connecté au récepteur et permet d'afficher les données diffusées,
- un dispositif portable qui n'est pas connecté de manière permanente au récepteur, permet d'acquérir une localisation. Cette localisation peut être une géo-localisation (GPS) ou la réception d'un identifiant transmis par une antenne locale. Cette antenne peut être une antenne de téléphonie mobile (GSM) ou une antenne de diffusion de type DVB-H,
- des moyens de vérification, qui contiennent une ou plusieurs localisations de référence et qui permettent de vérifier si la localisation courante, tel qu'acquise par le dispositif portable, est dans une zone d'autorisation. Ces données de référence peuvent être propres à un utilisateur, un groupe d'utilisateur ou tous les récepteurs d'un opérateur.
- une transmission par le dispositif portable de la localisation acquise vers les moyens de vérification pour effectuer la vérification décrite ci-dessus,
- des moyens de sécurité, liés au récepteur, pour autoriser ou interdire l'accès aux données diffusées, en fonction du résultat de la vérification faite par les moyens de vérification,
- un code unique, unique dans le sens qu'il ne sera pas réutilisé lors de vérification de localisation successive, est transmis du récepteur au dispositif portable, ce dernier associant les données de localisation avec le code unique, les moyens de vérification étant capable de vérifier l'authenticité dudit code unique reçu avec les données de localisation. Ce code est unique par processus de vérification, à savoir qu'il peut de plus être unique par récepteur ou le même à un moment donné sur plusieurs récepteurs.

Le récepteur STB de l'utilisateur comprend des moyens de réception d'un flux de données audiovisuelles diffusées. Plusieurs types de réception peuvent être supportés par le récepteur comme la réception par câble, par satellite, par voie hertzienne ou par flux IP. Tous ces flux ont en commun le fait que le même flux est diffusé à de nombreux récepteurs et c'est pourquoi la mise en œuvre de la vérification d'autorisation d'accès se fait au niveau du récepteur. Le champ de la présente demande couvre également la transmission à la demande telle que VOD, Replay TV. De préférence, le récepteur dispose de moyens de sécurité qui peuvent être de plusieurs formes :
- un circuit dédicacé, monté sur le circuit imprimé du récepteur et qui effectue toutes les opérations de sécurité. Ce circuit contient une mémoire sécurisée qui conserve les clés et les droits de l'utilisateur.
- une zone silicium d'un circuit spécialisé. Le circuit spécialisé intègre toutes les fonctions du récepteur, notamment la sélection d'un flux parmi plusieurs flux, la séparation des flux audio et vidéo, la décompression et la gestion de l'affichage. Une section de ce circuit est réservée aux opérations de sécurité et contient une mémoire sécurisée conservant les données propre à un utilisateur.
- un module indépendant, tel qu'un dongle ou une carte à puce comprenant des moyens de traitement et au moins une mémoire sécurisée. Ce module est connecté par exemple par un connecteur USB ou ISO 7816. Le récepteur filtre les messages de gestion du système de contrôle d'accès et les envoie au module indépendant. Ce dernier les traite et renvoie les clés ou informations utiles au fonctionnement du récepteur.
- un module logiciel. L'unité centrale du récepteur peut traiter plusieurs contextes et la fonction de sécurité est un logiciel qui est exécuté par la même unité centrale que la gestion du récepteur. Une section spéciale de la mémoire est réservée à ce programme et l'accès aux autres programmes tournant sur le récepteur est limité.

Un récepteur est identifié par un numéro unique UA. Ce numéro est stocké de préférence dans une mémoire de manière permanente du récepteur afin de ne pas pouvoir être modifié sans autorisation. Ce numéro n'est pas nécessairement secret et il est en général imprimé au dos du récepteur.

Selon une forme particulière, le récepteur est un module qui vient se connecter dans un connecteur de l'écran. Une forme connue est le module PCMCIA mais d'autres type de connexion (tel que USB, Firewire) sont possibles. Dans ce cas, l'alimentation est fournie par l'écran et le dialogue avec l'utilisateur transite par le connecteur et utilise les moyens (télécommande) de l'écran. Ces modules sont connus sous l'appellation CAM (Conditional Access Module).

### Code unique

Ce code unique est au moins unique par session de vérification et ne sera pas réutilisé lors d'une prochaine phase de vérification. Il peut être généré par le centre de gestion et envoyé dans le message d'invitation d'une vérification ou être généré par le récepteur tel qu'un nombre aléatoire. Dans ce cas, il sera de plus unique par récepteur.

Ce code est ensuite transmis au dispositif portable. Ceci peut se faire soit par l'entremise de l'écran (affichage du code à l'écran et retranscription dans le dispositif portable) ou transmis directement grâce à des moyens de communication locaux au dispositif portable.

Ce code unique doit pouvoir être vérifié par les moyens de vérification. A cet effet, ces moyens reçoivent également le code unique généré afin de pouvoir le comparer avec celui transmis avec la localisation courante. Alternativement, les moyens de vérification ne reçoivent pas le code unique mais peuvent vérifier l'authenticité dudit code par l'intermédiaire de la clé personnelle du récepteur. Dans ce cas, les moyens de vérification contiennent la clé personnelle du récepteur et un moyen pour identifier le récepteur afin de pouvoir retrouver sa clé. En décryptant le code unique reçu avec la clé personnelle du récepteur supposé avoir produit ce code unique, les moyens de vérification peuvent vérifier que le code décrypté respecte les règles fixées et connues du récepteur et des moyens de vérification. Par exemple, le code unique peut être le résultat d'une encryption de la date courante par la clé personnelle du récepteur. Les moyens de vérification reçoivent le code unique et l'identifiant du récepteur. Grâce à cet identifiant, la clé personnelle est retrouvée et appliquée sur le code unique. Le résultat de la décryption devrait avoir le format d'une date (ex. année, mois, jour) pour que le code soit considéré comme authentique.

Plusieurs variantes de ce code unique sont prévues dans le cadre de l'invention :
- ce code est contenu dans le message d'invitation et donc généré au centre de gestion. Le message d'invitation peut être global, c'est-à-dire que le code unique sera le même pour tous les récepteurs, ou à adressage unique, permettant de générer, par le centre de gestion, un code unique par récepteur. Si les moyens de vérification sont placés dans le centre de gestion, le code unique est transmis directement auxdits moyens.
- ce code est généré par le récepteur. Il peut être un numéro aléatoire ou une donnée telle que l'heure ou la date combinée avec une clé personnelle. Par exemple, la date et l'heure sont encryptées par cette clé et forme le code. Le centre de gestion, après avoir reçu le message de l'accessoire intelligent comprenant le code et la localisation, peut vérifier le code reçu en décryptant ce code avec la clé personnelle du récepteur. Cette clé est retrouvée en identifiant l'accessoire intelligent et le récepteur auquel il est associé. Une fois le récepteur connu, la clé personnelle qui est stockée dans une base de données du centre de gestion est retrouvée. Une fois le code décrypté, il est possible de vérifier que l'heure et la date correspondent à une fenêtre de temps suivant l'envoi du message par le centre de gestion et donc de valider le code unique.

Dans le cas de l'envoi de ce code sur l'écran, l'affichage de ce code peut se faire sous forme alphanumérique ou graphique. Dans ce cas ce code est sous la forme d'une image de type barre-code ou QR code, l'accessoire intelligent comprenant une caméra pour lire ce code. Cette image peut contenir de nombreuses informations telles que l'identifiant du récepteur ou des moyens de sécurité, la date et/ou l'heure, un code unique. Cette image est acquise par une caméra de l'accessoire intelligent et convertie par ledit accessoire en un string de données. Ce string est ensuite associé aux données de localisation qui sont transmises au centre de gestion. Le centre de gestion pourra vérifier, en plus de la localisation que le string correspond à l'image affichée par le récepteur.

### Premier mode de réalisation

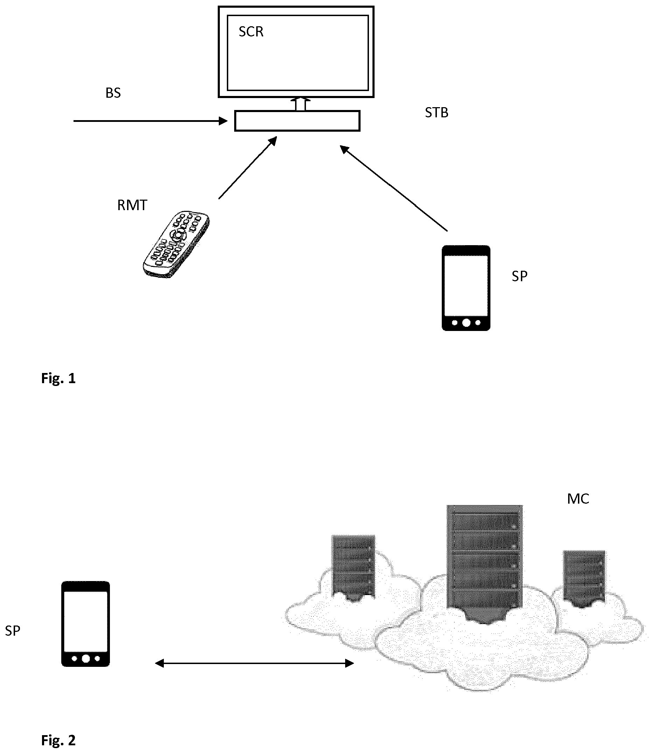

Ce premier mode est caractérisé en ce que la localisation courante, acquise par le dispositif portable, est transmise au récepteur. Elle est illustrée par les figures 1 et 2. Le dispositif local peut être la télécommande RMT du récepteur (ou de l'écran SCR dans le cas du module CAM) et la communication peut simplement être la liaison infrarouge. La télécommande peut disposer d'un autre canal de communication tel que bluetooth ou NFC. Une fois la localisation acquise et temporairement mémorisée dans la télécommande, l'utilisateur s'approche du récepteur et lance le transfert de cette localisation vers le récepteur STB. Le code unique, reçu précédemment est joint aux données de localisation. Afin de sécuriser cette localisation, les données envoyées par la télécommande peuvent être de plus encryptées par une clé préalablement chargée dans le récepteur et la télécommande. Ainsi, on crée un couple interdisant qu'une autre télécommande puisse être utilisée à cet effet.

Dans le mode utilisant un accessoire intelligent SP, le principe est le même à savoir que ce dernier, acquiert la localisation courante (soit par GPS, par un identifiant d'antenne, par triangulation d'émetteur tels que de téléphonie mobile) et la transmet au récepteur STB par des moyens de communication local avec le code unique précédemment reçu. Dans une forme de réalisation, la communication des données échangées sont sécurisées par une encryption. La clé d'encryption peut être chargée par une connexion préalable par l'accessoire intelligent à un centre de gestion durant une procédure d'initialisation. Durant cette procédure, l'accessoire intelligent reçoit une invitation à identifier le récepteur par exemple en indiquant son identifiant. Le centre de gestion va rechercher dans sa base de données la clé d'encryption correspondant audit récepteur et l'envoie à l'accessoire intelligent. Ce dernier stocke cette clé et l'utilise pour transmettre les données de localisation au récepteur.

Le centre de gestion peut également envoyer une application qui se charge sur l'accessoire intelligent et qui va gérer l'acquisition de localisation et l'envoi de ces données au récepteur. Cette application disposera de la clé personnelle d'encryption du récepteur dissimulée dans l'application.

Cette opération de localisation est déclenchée par un message d'invitation transmis par le centre de gestion aux récepteurs auxquels il est connecté. Le message peut être envoyé dans le signal diffusé BS ou adressé à un récepteur via une connexion directe (par protocole IP par exemple). Ce message déclenche l'obtention du code unique selon la description ci-dessus.

Le message d'invitation pourra comprendre également une durée maximale qui est mémorisée par le récepteur, de préférence dans ses moyens de sécurité. Cette information permet de vérifier une durée qu'il a fallu pour obtenir une réponse du dispositif portable. Lors de la réception des données de localisation et du code unique, la durée entre l'apparition du message et la réception des données est calculée et comparée à la durée maximale. Si cette durée calculée est supérieure à la durée maximale, la vérification conduit au rejet de la localisation courante.

Il peut arriver que le message d'invitation arrive à un moment inopportun et la fenêtre qui invite l'utilisateur à la vérification comporte une option de report. L'utilisateur a la possibilité par exemple de reporter cette vérification de 30 minutes. Une fois le temps écoulé et l'utilisateur disposé à effectuer la vérification, le récepteur transmet le code unique. Sans l'introduction de ce code, la localisation par le dispositif portable ne peut pas débuter. Il n'est ainsi pas possible de mettre à profit les 30 minutes de report pour déplacer le dispositif portable dans une autre zone. Une fois la localisation établie par le dispositif portable. Les données sont envoyées au récepteur avec le code unique introduit précédemment. Le récepteur peut dès lors vérifier que le code reçu est le même que celui affiché avec l'invitation et calculer la durée courante. Si le code est correct et que la durée n'excède pas la durée maximale contenue dans le message, la localisation est acceptée.

Une fois cette étape franchie, le récepteur a deux options, soit faire la vérification lui-même ou déléguer cette vérification au centre de gestion.

Dans le premier cas, ceci signifie que les moyens de vérification sont contenus dans le récepteur. Ces moyens sont placés avec les moyens de sécurité. Le récepteur a transmis au préalable le code unique auxdits moyens de vérification. Les moyens de vérification disposent d'une mémoire contenant les données de localisation définissant au moins une zone d'autorisation. Ces données peuvent être sous la forme d'une surface définie par les positions de géo-localisation ou un set d'identifiants d'antenne dans le cas d'une localisation par identifiant d'antenne. Les moyens de vérification vérifient que le code unique reçu du dispositif portable est correct, et dans l'affirmative, vérifient que la localisation courante, reçu du dispositif portable est comprise dans la zone. Dans l'affirmative, le récepteur continue à fonctionner normalement. Dans la négative, le récepteur peut prendre différentes mesures tel que l'envoi d'un message à un centre de gestion (ce message comprenant l'identifiant du récepteur et le type de problème constaté), ou bloquer, limiter ou dégrader les fonctionnalités du récepteur (par exemple en bloquant les contenus HD et en laissant les contenus SD).

Afin d'effectuer cette vérification, les moyens de vérification doivent disposer de la zone d'autorisation. Ces informations peuvent être contenues dans le message d'invitation ou être déjà présent dans les moyens de vérification, par exemple chargé durant une phase d'initialisation ou par la réception d'un message de configuration tel qu'un EMM (Entitlement Management Message).

Dans le second cas, le récepteur peut disposer d'un moyen de communication avec le centre de gestion, par exemple par une connexion IP. La localisation courante et le code unique reçus du dispositif portable sont envoyés au centre de gestion avec l'identifiant du récepteur. Le centre de gestion comprend les moyens de vérification qui vont, pour l'identifiant reçu, retrouver la zone d'autorisation et vérifier si la localisation courante est comprise dans la zone ainsi que vérifier le code unique.

Le centre de gestion peut prendre plusieurs mesures dans le cas où la localisation courante est en dehors de la zone :
- marquer cet identifiant comme bloqué et ne plus envoyer les messages contenant les clés qui permettent la continuation de la réception pour ce récepteur; les clés sont périodiquement renouvelée et les récepteur doivent recevoir les nouvelles clé pour accéder au contenu, et/ou
- envoyer un message de blocage, soit par la voie de diffusion, soit par la voie IP; ce message est traité par les moyens de sécurité du récepteur qui va cesser de fournir les clés de décryption au décodeur du récepteur.

Inversement, si la localisation est à l'intérieur de la zone, le centre de gestion peut aussi envoyer un message EMM qui va renouveler la date d'expiration des droits de réception. Ce message peut être envoyé immédiatement suivant la vérification ou plus tard lorsque les clés du système d'encryption des contenus viennent à changer.

### Second mode de réalisation

Ce second mode est caractérisé en ce que la localisation courante, acquise par le dispositif portable, est transmise directement au centre de gestion avec le code unique. Pour cela, le dispositif portable comporte des moyens de localisation et de communication distant avec le centre de gestion, par exemple par le réseau Wifi, ou 3G/4G. On parlera alors d'un accessoire intelligent.

Ce mode est de préférence associé à une application spécifique chargée dans l'accessoire intelligent qui exécute l'opération d'acquisition de la localisation et l'envoi des données. Cette localisation est déclenchée de la même manière que précédemment, à savoir la transmission du code unique depuis le récepteur vers le dispositif portable selon l'un des modes décrits ci-dessus.

Le centre de gestion peut prendre plusieurs mesures dans le cas ou la localisation courante est en dehors de la zone :
- marquer cet identifiant comme bloqué et ne plus envoyer les messages contenant les clés qui permettent la continuation de la réception pour ce récepteur; les clés sont périodiquement renouvelée et les récepteur doivent recevoir les nouvelles clé pour accéder au contenu, et/ou
- envoyer un message de blocage, soit par la voie de diffusion, soit par la voie IP; ce message est traité par les moyens de sécurité du récepteur qui va cesser de fournir les clés de décryption au décodeur du récepteur.

Inversement, si la localisation est à l'intérieur de la zone, le centre de gestion peut aussi envoyer un message EMM qui va renouveler la date d'expiration des droits de réception.

### Troisième mode de réalisation

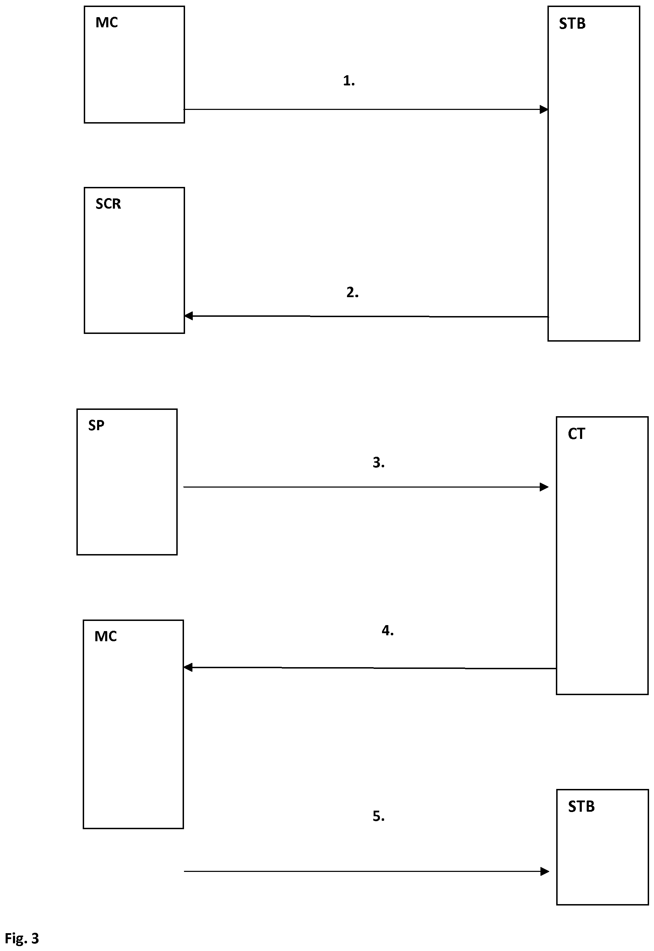

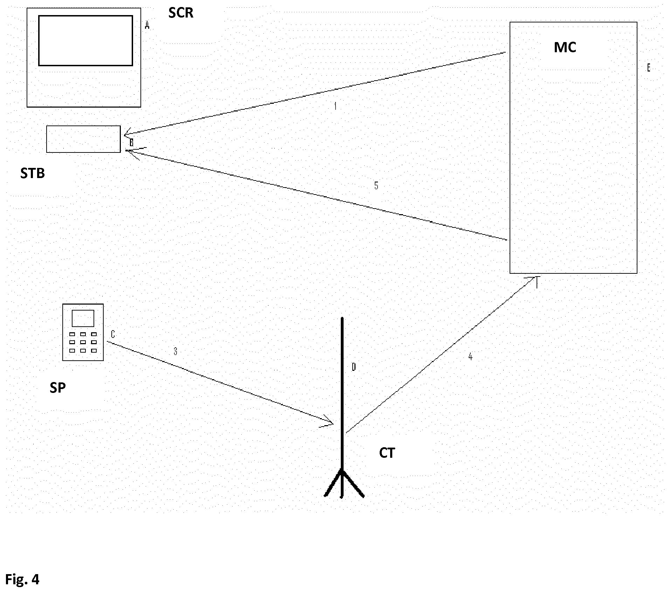

Ce troisième mode est basé sur une localisation intrinsèque d'un message reçu par le centre de gestion MC. Il est illustré par les figures 3 et 4. Il reprend toutes les explications des modes précédents concernant le mode dans lequel le dispositif portable communique directement avec le centre de gestion. A cet effet le dispositif portable peut être un simple téléphone mobile sans fonctionnalité additionnelle.

La particularité est que le dispositif portable peut être un téléphone mobile sans moyens de localisation. Il n'aura pas besoin d'acquérir sa localisation. On lui demande uniquement d'envoyer un message SMS au centre de gestion, contenant par exemple l'identifiant du récepteur ou un code d'identification affiché sur l'écran et contenu dans le message d'invitation. Cette information n'est même pas nécessaire car le centre de gestion, en connaissant le numéro de téléphone peut retrouver l'identifiant du récepteur auquel il est associé. Le code peut être produit selon les modes de réalisation décrit ci-dessus.

Le téléphone portable envoie un message 3 au centre de gestion en utilisant la plus proche tour de communication CT. La tour de communication CT relaie le message 4 au centre de gestion en ajoutant des données de services tel que l'identifiant de la tour CT.

Lors de la réception du message 4 par le centre de gestion, ce dernier extrait les données de service pour identifier la tour qui a servi de premier relais au message envoyé par le téléphone portable. Cet identifiant devient la localisation courante telle que décrite en relation avec les modes ci-dessus. Le numéro de téléphone associé au message permet de retrouver l'identifiant du récepteur et donc ses données de zone(s) d'autorisation.

Les mêmes options discutées précédemment en rapport avec la réponse du centre de gestion sont applicables ici. Le message EMM (par exemple message de blocage, ou de renouvellement) est illustré par la référence 5 sur les figures 3 et 4.

### Module GPS indépendant

Dans le cadre de cette invention, il est proposé un module GPS indépendant à alimentation autonome et comprenant des moyens de communication sans fil avec le récepteur (tel que Bluetooth). La position d'un tel module doit être proche d'une fenêtre ou placé à l'extérieur ce qui peut rendre l'alimentation via le réseau difficile. C'est pourquoi il est proposé ce module GPS indépendant alimenté par pile, batterie et/ou capteur solaire. Un point important est que ce module puisse être en mode veille la majorité du temps. Selon un mode de réalisation, ledit module peut comprendre une horloge qui va réveiller le module à un moment donné. Selon un premier mode de réalisation, le récepteur est à l'écoute en permanence des messages transmis par ledit module. Un message va comprendre la localisation et peut également comprendre un identifiant de module. Selon ce mode, le module va à intervalle régulier transmettre la localisation courante. Celle-ci est mémorisée dans le récepteur et lorsqu'une vérification est demandée par le centre de gestion, la dernière localisation reçue est utilisée. Afin d'optimiser le temps de veille du module GPS, le centre de gestion, dans son message d'invite à la vérification, peut indiquer quand une prochaine vérification sera faite. Ceci permet au récepteur, lors d'une communication avec le module GPS, de lui indiquer quand il faut qu'il se réveille. Le module GPS peut donc être en mode veille (avec une consommation compatible avec un capteur solaire) durant plusieurs jours. Peu de temps avant l'arrivée du message provenant du centre de gestion, l'horloge du module GPS réveille le module et une localisation est acquise et transmise au récepteur.

Selon un autre mode de réalisation, l'activation du module GPS est initiée par la pression d'un bouton. Lorsque le récepteur affiche le message de vérification, l'utilisateur va presser sur le bouton d'activation du module GPS ce qui va alimenter le module. Le module va enclencher la puce GPS et acquérir la localisation et la transmettre vers le récepteur. Ensuite, le module retourne dans le mode veille.

Dans ces modes de réalisation, le module ne reçoit pas de code unique de la part du récepteur. On compte sur la faible portée de la transmission sans fil pour garantir la proximité. Il est néanmoins possible de stocker dans le module et dans le récepteur une clé d'encryption qui est unique pour ce couple. Ainsi, même si un tiers intercepte le message transmis par le module GPS, il ne sera pas compris par un autre récepteur car les données de localisation sont encryptées avec la clé d'encryption propre à un seul couple module/récepteur.

Les différents modes et explications ci-dessus permettent d'assurer que le récepteur est à un endroit qui est compatible avec les droits de réception.

## Revendications

1. Méthode de contrôle d'accès à du contenu diffusé à un récepteur, ledit récepteur faisant partie d'un système de contrôle géographique d'accès, ledit récepteur comprenant des moyens de vérification et des moyens de sécurité, la méthode comprenant les étapes :
- réception d'un message d'invitation de vérification par le récepteur,
- génération d'un code à usage unique par le récepteur,
- transmission dudit code à usage unique auxdits moyens de vérification du récepteur,
- transmission dudit code à usage unique à un dispositif portable,
- acquisition d'une localisation courante par le dispositif portable,
- transfert de la localisation courante et dudit code à usage unique du dispositif portable aux moyens de vérification dudit récepteur,
- vérification du code à usage unique reçu par les moyens de vérification, et si le code est correct,
- extraction dans une mémoire des moyens de vérification, d'un set de données de localisation définissant au moins une zone,
- vérification par les moyens de vérification que la localisation courante est incluse dans ladite zone, et dans l'affirmative, transmission, par les moyens de vérification, d'un message d'autorisation de réception du contenu audiovisuel aux moyens de sécurité dudit récepteur
- autoriser ou interdire, par les moyens de sécurité, l'accès au contenu diffusé au récepteur en fonction du résultat de la vérification.

2. Méthode selon la revendication 1, **caractérisée en ce que** le message d'invitation comprend une durée maximale, la vérification du code à usage unique comprend de plus une étape de calcul d'une durée entre l'apparition du message d'invitation et la réception de la localisation courante et dudit code à usage unique par les moyens de vérification et la vérification que cette durée calculée est inférieure ou égale à ladite durée maximale.

3. Méthode selon l'une des revendications 1 ou 2, **caractérisée en ce que** le récepteur affiche le code à usage unique sur un écran lié audit récepteur, le dispositif portable comprenant des moyens pour acquérir ce code à usage unique.

4. Méthode selon la revendication 3, **caractérisée en ce que** le récepteur affiche une image alphanumérique sur l'écran représentant le code à usage unique, le dispositif portable comprenant un clavier pour l'introduction dudit code à usage unique.

5. Méthode selon la revendication 3, **caractérisée en ce que** le récepteur affiche une image représentant le code à usage unique, et comprenant les étapes suivantes :
- acquisition de l'image par un dispositif de lecture optique dudit dispositif portable,
- conversion de l'image pour obtenir le code à usage unique afin d'être ajouté à la localisation courante.

6. Méthode selon la revendication 1, **caractérisée en ce que** le récepteur comprend des moyens de communication locaux à faible portée avec le dispositif portable, le code à usage unique étant envoyé via lesdits moyens.

7. Méthode selon l'une des revendications 1 à 6, dans laquelle le dispositif portable est un accessoire intelligent comprenant un GPS et disposant de moyens de communication locaux avec ledit récepteur, lesdits moyens de communication utilisant une clé d'encryption pour sécuriser les échanges de messages, **caractérisée en ce qu'**elle comprend les étapes, exécutées par l' accessoire intelligent :
- télécharger et charger une application dans une mémoire dudit accessoire intelligent,
- accéder un centre de gestion et identifier le récepteur auprès dudit centre de gestion,
- retrouver une clé d'encryption correspondant audit récepteur dans une base de données dudit centre de gestion,
- transmettre par le centre de gestion la clé d'encryption audit accessoire intelligent,
- utiliser ladite clé d'encryption pour encrypter et/ou signer les données courantes de localisation.

8. Système de réception d'un contenu audiovisuel diffusé formé par un récepteur (STB) comprenant des moyens de vérification et des moyens de sécurité, un écran (SCR) connecté audit récepteur et un dispositif portable (SP, RMT) comprenant des moyens d'acquisition d'une localisation courante, et de transfert de ladite localisation courante vers le récepteur (STB), le récepteur comprenant des moyens pour générer et transmettre un code à usage unique audit dispositif portable lors de la réception d'un message d'invitation de vérification, le dispositif portable comprenant des moyens pour recevoir ledit code à usage unique et pour composer et transmettre au récepteur un message comprenant la localisation courante et ledit code à usage unique, lesdits moyens de vérification comprenant des moyens pour vérifier le code à usage unique et une mémoire comprenant un set de données de localisation définissant au moins une zone d'autorisation, lesdits moyens de vérification comprenant des moyens pour vérifier si la localisation courante est incluse dans ladite zone et dans l'affirmative, pour transmettre un message d'autorisation de réception du contenu audiovisuel aux moyens de sécurité, lesdits moyens de sécurité comprenant des moyens pour autoriser ou interdire l'accès au contenu diffusé au récepteur en fonction du résultat de la vérification.

9. Système selon la revendication 8, **caractérisé en ce que** le récepteur comprend des moyens de génération du code à usage unique, ledit code à usage unique étant transmis à l'écran et aux moyens de vérification.

10. Système selon la revendication 8 ou 9, **caractérisé en ce que** le dispositif portable(SP) comprend un dispositif de lecture optique, ledit code à usage étant affiché sur l'écran (SCR) sous la forme d'une image, ledit dispositif de lecture optique comprenant des moyens pour acquérir l'image et la convertir pour obtenir le code à usage unique.

11. Système selon la revendication 8 ou 9, **caractérisé en ce que** le dispositif portable est une télécommande (RMT) liée audit récepteur (STB) ou un téléphone intelligent (SP).

## Patentansprüche

1. Verfahren zur Steuerung des Zugriffs auf Inhalt, der an einen Empfänger verbreitet wird, wobei der Empfänger zu einem geografischen Zugriffssteuerungssystem gehört, wobei der Empfänger Verifizierungsmittel und Sicherheitsmittel umfasst, wobei das Verfahren die Schritte umfasst des:
- Empfangens einer Verifizierungsaufforderungsnachricht durch den Empfänger,
- Erzeugens eines einmalig verwendbaren Codes durch den Empfänger,
- Übertragens des einmalig verwendbaren Codes an die Verifizierungsmittel des Empfängers,
- Übertragens des einmalig verwendbaren Codes an eine tragbare Vorrichtung,
- Erfassens eines aktuellen Standorts durch die tragbare Vorrichtung,
- Übermittelns des aktuellen Standorts und des einmalig verwendbaren Codes von der tragbaren Vorrichtung an die Verifizierungsmittel des Empfängers,
- Verifizierens des empfangenen einmalig verwendbaren Codes durch die Verifizierungsmittel, und wenn der Code korrekt ist,
- Extrahierens eines Satzes von Standortdaten, die mindestens eine Zone definieren, in einem Speicher der Verifizierungsmittel,
- Verifizierens durch die Verifizierungsmittel, dass der aktuelle Standort in der Zone eingeschlossen ist, und wenn dem der Fall ist, Übertragens einer Nachricht zum Autorisieren des Empfangs des audiovisuellen Inhalts durch die Verifizierungsmittel an die Sicherheitsmittel des Empfängers,
- Autorisierens oder Verbietens des Zugriffs auf den an den Empfänger verbreiteten Inhalt durch die Sicherheitsmittel in Abhängigkeit vom Ergebnis der Verifizierung.

2. Verfahren nach Anspruch 1, **dadurch gekennzeichnet, dass** die Aufforderungsnachricht eine maximale Dauer umfasst, das Verifizieren des einmalig verwendbaren Codes zusätzlich einen Schritt des Berechnens einer Dauer zwischen dem Eintreffen der Aufforderungsnachricht und dem Empfang des aktuellen Standorts und des einmalig verwendbaren Codes durch die Verifizierungsmittel und das Verifizieren umfasst, dass diese berechnete Dauer kleiner oder gleich der maximalen Dauer ist.

3. Verfahren nach einem der Ansprüche 1 oder 2, **dadurch gekennzeichnet, dass** der Empfänger den einmalig verwendbaren Code auf einem Bildschirm anzeigt, der mit dem Empfänger verbunden ist, wobei die tragbare Vorrichtung Mittel umfasst, um diesen einmalig verwendbaren Code zu erfassen.

4. Verfahren nach Anspruch 3, **dadurch gekennzeichnet, dass** der Empfänger ein alphanumerisches Bild auf dem Bildschirm anzeigt, das den einmalig verwendbaren Code darstellt, wobei die tragbare Vorrichtung eine Tastatur für die Eingabe des einmalig verwendbaren Codes umfasst.

5. Verfahren nach Anspruch 3, **dadurch gekennzeichnet, dass** der Empfänger ein Bild anzeigt, das den einmalig verwendbaren Code darstellt, und die folgenden Schritte umfassend:
- Erfassen des Bildes durch eine optische Lesevorrichtung der tragbaren Vorrichtung,
- Umwandeln des Bildes, um den einmalig verwendbaren Code zu erhalten, um zum aktuellen Standort hinzugefügt zu werden.

6. Verfahren nach Anspruch 1, **dadurch gekennzeichnet, dass** der Empfänger Mittel zur lokalen Kommunikation mit der tragbaren Vorrichtung mit geringer Reichweite umfasst, wobei der einmalig verwendbare Code über die Mittel gesendet wird.

7. Verfahren nach einem der Ansprüche 1 bis 6, wobei die tragbare Vorrichtung ein Smartzubehör ist, das ein GPS umfasst und über Mittel zur lokalen Kommunikation mit dem Empfänger verfügt, wobei die Kommunikationsmittel einen Verschlüsselungsschlüssel verwenden, um die Austausche von Nachrichten zu sichern, **dadurch gekennzeichnet, dass** es die vom Smartzubehör ausgeführten Schritte umfasst des:
- Herunterladens und Ladens einer Anwendung in einem Speicher des Smartzubehörs,
- Zugreifens auf ein Verwaltungszentrum und Identifizierens des Empfängers beim Verwaltungszentrum,
- Suchens eines Verschlüsselungsschlüssels, der dem Empfänger entspricht, in einer Datenbank des Verwaltungszentrums,
- Übertragens des Verschlüsselungsschlüssels durch das Verwaltungszentrum an das Smartzubehör,
- Verwendens des Verschlüsselungsschlüssels, um die aktuellen Standortdaten zu verschlüsseln und/oder zu signieren.

8. System zum Empfangen eines audiovisuellen Inhalts, der verbreitet wird, das gebildet wird von einem Empfänger (STB), der Verifizierungsmittel und Sicherheitsmittel umfasst, einem Bildschirm (SCR), der mit dem Empfänger verbunden ist, und einer tragbaren Vorrichtung (SP, RMT), die Mittel zum Erfassen eines aktuellen Standorts und zum Übermitteln des aktuellen Standorts an den Empfänger (STB) umfasst, wobei der Empfänger Mittel umfasst, um beim Empfang einer Verifizierungsaufforderungsnachricht einen einmalig verwendbaren Code zu erzeugen und an die tragbare Vorrichtung zu übertragen, wobei die tragbare Vorrichtung Mittel umfasst, um den einmalig verwendbaren Code zu empfangen und um eine Nachricht, die den aktuellen Standort und den einmalig verwendbaren Code umfasst, zu verfassen und an den Empfänger zu übertragen, wobei die Verifizierungsmittel Mittel umfassen, um den einmalig verwendbaren Code zu verifizieren, und einen Speicher, der einen Satz von Standortdaten umfasst, die mindestens eine Autorisierungszone definieren, wobei die Verifizierungsmittel Mittel umfassen, um zu verifizieren, ob der aktuelle Standort in der Zone eingeschlossen ist, und um, wenn dem der Fall ist, eine Nachricht zum Autorisieren des Empfangs des audiovisuellen Inhalts an die Sicherheitsmittel zu übertragen, wobei die Sicherheitsmittel Mittel umfassen, um den Zugriff auf den an den Empfänger verbreiteten Inhalt in Abhängigkeit vom Ergebnis der Verifizierung zu autorisieren oder zu verbieten.

9. System nach Anspruch 8, **dadurch gekennzeichnet, dass** der Empfänger Mittel zum Erzeugen des einmalig verwendbaren Codes umfasst, wobei der einmalig verwendbare Code an den Bildschirm und an die Verifizierungsmittel übertragen wird.

10. System nach Anspruch 8 oder 9, **dadurch gekennzeichnet, dass** die tragbare Vorrichtung (SP) eine optische Lesevorrichtung umfasst, wobei der verwendbare Code in der Form eines Bildes auf dem Bildschirm (SCR) angezeigt wird, wobei die optische Lesevorrichtung Mittel umfasst, um das Bild zu erfassen und dasselbe umzuwandeln, um den einmalig verwendbaren Code zu erhalten.

11. System nach Anspruch 8 oder 9, **dadurch gekennzeichnet, dass** die tragbare Vorrichtung eine Fernbedienung (RMT) ist, die mit dem Empfänger (STB) oder einem Smartphone (SP) verbunden ist.

## Claims

1. A method for controlling access to content broadcast to a receiver, said receiver being part of a geographical access control system, said receiver comprising verification means and security means, the method comprising the steps:
- receiving a verification invitation message by the receiver,
- generating a single-use code by the receiver,
- transmitting said single-use code to said verification means of the receiver,
- transmitting said single-use code to a portable device,
- acquiring a current location by the portable device,
- transferring the current location and said single-use code from the portable device to the verification means of said receiver,
- verifying the single-use code received by the verification means, and if the code is correct,
- extracting in a memory of the verification means, a set of location data defining at least one zone,
- verifying by the verification means that the current location is included in said zone, and if so, transmitting, by the verification means, an authorisation message for receiving the audiovisual content to the security means of said receiver
- authorising or prohibiting, by the security means, the access to the content broadcast to the receiver based on the verification result.

2. The method according to claim 1, **characterised in that** the invitation message comprises a maximum duration, the verification of the single-use code further comprises a step of calculating a duration between the appearance of the invitation message and the reception of the current location and of said single-use code by the verification means and verifying that this calculated duration is less than or equal to said maximum duration.

3. The method according to one of claims 1 or 2, **characterised in that** the receiver displays the single-use code on a screen linked to said receiver, the portable device comprising means for acquiring this single-use code.

4. The method according to claim 3, **characterised in that** the receiver displays an alphanumeric image on the screen representing the single-use code, the portable device comprising a keyboard for the input of said single-use code.

5. The method according to claim 3, **characterised in that** the receiver displays an image representing the single-use code, and comprising the following steps:
- acquiring the image by an optical reading device of said portable device,
- converting the image to obtain the single-use code in order to be added to the current location.

6. The method according to claim 1, **characterised in that** the receiver comprises short-range local communication means with the portable device, the single-use code being sent via said means.

7. The method according to one of claims 1 to 6, wherein the portable device is a smart accessory comprising a GPS and having local communication means with said receiver, said communication means using an encryption key to secure the exchanges of messages, **characterised in that** it comprises the steps, executed by the smart accessory:
- downloading and loading an application into a memory of said smart accessory,
- accessing a management centre and identifying the receiver to said management centre,
- finding an encryption key corresponding to said receiver in a database of said management centre,
- transmitting by the management centre the encryption key to said smart accessory,
- using said encryption key for encrypting and/or signing the current location data.

8. A system for receiving an audiovisual broadcast content formed by a receiver (STB) comprising verification means and security means, a screen (SCR) connected to said receiver and a portable device (SP, RMT) comprising means for acquiring a current location, and transferring said current location to the receiver (STB), the receiver comprising means for generating and transmitting a single-use code to said portable device upon receiving a verification invitation message, the portable device comprising means for receiving said single-use code and for composing and transmitting to the receiver a message comprising the current location and said single-use code, said verification means comprising means for verifying the single-use code and a memory comprising a set of location data defining at least one authorisation zone, said verification means comprising means for verifying whether the current location is included in said zone and if so, for transmitting an authorisation message for receiving the audiovisual content to the security means, said security means comprising means for authorising or prohibiting the access to the content broadcast to the receiver based on the verification result.

9. The system according to claim 8, **characterised in that** the receiver comprises means for generating the single-use code, said single-use code being transmitted to the screen and to the verification means.

10. The system according to claim 8 or 9, **characterised in that** the portable device (SP) comprises an optical reading device, said use code being displayed on the screen (SCR) in the form of an image, said optical reading device comprising means for acquiring the image and converting it to obtain the single-use code.

11. The system according to claim 8 or 9, **characterised in that** the portable device is a remote control (RMT) linked to said receiver (STB) or a smart phone (SP).
